# EUROPEAN PATENT APPLICATION

(11) **EP 0 945 813 A2**
(43) Date of publication of application: **29.09.1999**
(21) Application number: 99302154.2
(22) Date of filing: 19.03.1999
(51) Int. Cl.: G06F 17/60

(54) **Integrated perfomance support system protocol**

(30) Priority: 24.03.1998 US 46696
(71) Applicant: NORTEL NETWORKS CORPORATION, Montreal, Quebec H2Y 3Y4 (CA)
(72) Inventor: Bezanson, William Robert, Nepean, Ontario K2E 7R2 (CA); Dewar, David C., Kinburn, Ontario K0A 2H0 (CA); Robert, Jean, Hull, Québec J9A 2J4 (CA)
(74) Representative: Berkson, Michael David

(57) **Abstract**

A computer-implemented integrated performance support system (28) is described. The integrated performance support system uses a predefined message protocol for sending user support request messages from computer-implemented user applications (29-32) to a performance support engine which retrieves performance support information from one or more databases (40) and presents it to the user. The integration permits multiple application support and cross-training for an individual who must use more than one computer-implemented tools to perform a job function. The advantage is a standard for integrating a user support environment with more than one product, allowing simple and standardized inclusion of new products and support methods into the environment.

## Description

### Technical Field

This invention relates generally to computer-implemented performance support systems, which provide end-user productivity support functions in their computer-based work environments, and, in particular, to an integrated computer-implemented performance support system which permits a simple inclusion of new computer-implemented applications and support materials into a user support environment.

### Background of the Invention

The use of computer-implemented business applications has rapidly pervaded the modem work environment. Training and supporting workers in these environments has become increasingly complex and resource-intensive. Workers using computer-based systems are commonly faced with acquiring and maintaining competence in several applications, each of which tends to change at an uncomfortably rapid pace. Such changes frequently occur at the level of the computer-implemented tasks and tools. As well, the very nature of the work may likewise evolve. For example, workers may be required to adapt to new organizational paradigms such as self-directed teams, flexible project teams, working from home, computer-mediated work, or increased job mobility.

Other factors which contribute to a need for training and supporting workers include the facts that:
1) knowledge retention tends to decay with time and requires refresh;
2) some tasks are performed only occasionally with long intervals in between; and
3) training materials may not tightly link with the operation of the computer-implemented tasks and tools.

In such an environment, traditional worker support methods such as training and user documentation are becoming ineffective. Traditional training methods are not responsive to individual needs. They are organized around artificial schedules in which workers are frequently required to attend courses at centrally located training facilities. This takes them away from the job and contributes significantly to employer expense. Furthermore, traditional documentation methods involving cumbersome manuals which are printed on paper or distributed on other media such as electronic or laser disc are commonly outdated before they are published and often discarded or ignored by users. Consequently, significant sums are spent producing manuals that are rarely or never used.

An even more significant training challenge is the implementation of business procedures which require the use of multiple computer-implemented applications or tools. Embedded help systems and user documentation are generally oriented to the use of a single tool and do not facilitate cross-application training or support. The only viable solution to date has therefore been the use of traditional training methods such as classroom-based courses with its inherent disadvantage.

For these and other reasons, employers and managers have begun to recognize the value of work flow analysis. This recognition has engendered business process re-engineering, continuous process involvement and application redesign for process and outcome. Interfaces have been redeveloped for process improvement and business models have been re-engineered for performance support.

Performance support may be defined as a product or process attribute that aims to enhance user performance through a user interface and support environment that anticipates or responds to user needs and supports them conveniently and effectively. The user interface and support environment are collectively referred to as a Performance Support System (PSS). The purpose of a PSS is to provide just-in-time training, information and help functions for users of a computer-implemented application, system or product. The PSS is designed by adopting the perspective of a job performer and providing for the needs of the job performer to ensure performance enhancement. The PSS model requires that computer-implemented applications and tools provide resources to enable job performers to succeed by assisting them to make sense of the job, providing information in response to their inquiries, training them as needed, and coaching them as required. A PSS may even be programmed to observe the job performer and help to correct their performance if necessary, or suggest simpler or more efficient ways of performing their job functions. The PSS creates an environment that integrates business information with task structuring support and tools to enable rapid and consistent expert performance by job performers. Ideally, it facilitates incremental learning and on the job training.

While the concept of performance support is a worthy one which is developing acceptance as a preferred model for employee training and support, PSS have to date supported only single computer-based applications. Today's workers are routinely required to operate a plurality of computer-based applications in order to perform their job function. Many job functions also require the processing of information across applications and/or adherence to business procedures and job flows which are neither explicitly nor implicitly supported by the individual computer-implemented applications. The PSSs known to date therefore fail to provide a total work environment which is capable of property supporting employees involved in performing jobs that require knowledge and skills in the use of a plurality of computer-implemented tools.

There therefore exists a need for an integrated performance support system which provides the flexibility to permit industry to introduce performance support in their products while enabling business users of the products to tailor and/or supplement the performance support materials to satisfy the particular needs of their work environment.

### Objects of the Invention

It is therefore an object of the invention to provide an Integrated Performance Support System (IPSS).

It is a further object of the invention to provide an IPSS which serves as a standard for integrating a user support environment with one or more computer-implemented application and facilitates simple inclusion of new computer-implemented applications and support materials into the environment, in an extensible manner.

It is yet a further object of the invention to provide a message protocol for an IPSS.

It is another object of the invention to provide an IPSS which uses application agents to enhance performance support delivery services.

It is yet a further object of the invention to provide an IPSS which may include a metrics agent for accumulating statistics respecting the usage of the IPSS.

### Summary of the Invention

These and other objects of the invention are realized in a computer-implemented performance support system, comprising a performance support database for storing performance support information, a computer-implemented integrated performance support interface adapted to receive messages and retrieve information from the performance support database in response to a content of the messages **characterized** in that:
the performance support system is an integrated system that provides performance support for at least two computer-implemented applications using an integrated support engine adapted to receive messages which conform to a predefined protocol and a message transport system for transferring messages between the computer-implemented applications and the integrated performance support engine.

In accordance with a further aspect of the invention, there is described a method of providing computer-implemented integrated performance support, comprising the steps of building-in capacity to formulate request messages in a predefined message protocol for retrieving performance support information from an information source, the performance support information being in a format that permits selected portions to be retrieved in response to the request messages **characterized** in that:
the information source is independent of the computer-implemented application and the performance support information is deposited in the source independent of the computer-implemented application.

The invention therefore provides a computer-implemented IPSS and a method of providing same. The IPSS includes a plurality of computer-implemented applications enabled to provide performance support using a predefined messaging protocol by which information request messages are sent to an IPSS engine that directly or indirectly retrieves information from a database in response to the request messages. The IPSS in accordance with the invention is very adaptable in the scope of its implementation. For example, it is adapted to providing performance support for employees of a company, the employees being connected to the company's Local Area Network (LAN), Wide Area Network (WAN) or intranet. The IPSS is also adapted to providing performance support to larger, geographically dispersed individuals or groups, such as members of the general public having a connection to the Internet.

One advantage of the IPSS in accordance with the invention is that cross-application training and support can be provided, as well as training and support for proprietary business processes or procedures. In addition, the IPSS in accordance with the invention can be enabled with a metrics agent which routinely accumulates statistics respecting the activity of workers or users in order to permit management to locate and identify specific problems with the applications, business processes and/or users. The statistics accumulated by the metrics agent can also be used to identify support materials which may be unnecessary or which require modification in order to improve productivity, or ensure quality of service, or guide the enhancement of IPSS implementation.

The IPSS in accordance with the invention includes an IPSS engine. The performance support engine may be assisted by one or more application agents in retrieving support materials from a performance support database. The application agents may be dedicated to serving a specific application or may be generic agents which may serve information requests from any application or business process. Application agents which are dedicated to serving a specific application may have special knowledge related to the domain, functionality or terminology of the application. Application agents may also be enabled to send messages to applications or to other agents to request the retrieval of information.

The IPSS in accordance with the invention may also be enabled to perform a proactive role in performance support. In proactive performance support, the activity of the user may be monitored in order to implicitly determine when the user requires performance support or training. Monitoring may be accomplished by performance support algorithms embedded within an application, or by query messages sent from intelligent application agents associated with an application. In either instance, the user is proactively supported while performing job functions.

### Brief Description of the Drawings

The invention will now be further explained by way of example only and with reference to the following drawings in which:
Fig. 1 is a schematic diagram of a prior art performance support system referred to as a "linked PSS";
Fig. 2 is a schematic diagram of a prior art performance support system referred to as an "embedded PSS";
Fig. 3 is a schematic diagram of an IPSS in accordance with the invention;
Fig. 4 is a schematic diagram of the IPSS engine shown in Fig. 3 and its relationship with other principal components of the IPSS in accordance with the invention;
Fig. 5 is a schematic block diagram of the IPSS system shown in Fig. 4, the IPSS further including application agents which facilitate the retrieval of IPSS information in response to an information request message; and
Fig. 6 is a table showing a preferred message protocol, its fields and their function for an IPSS in accordance with a preferred embodiment of the invention.

### Detailed Description of the Preferred Embodiment

### Prior Systems

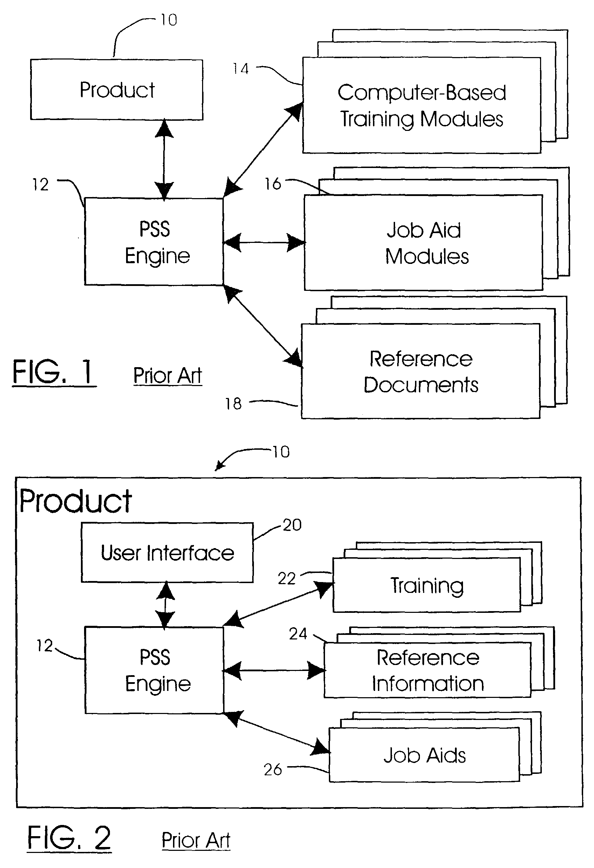

Performance support systems (PSS) are known in the art. Fig. 1 shows a schematic diagram of a prior art PSS commonly referred to as a "linked PSS". In a linked PSS, the PSS is linked to its host-computer implemented application referred to in the drawing as a "product" 10 by means of a software messaging system. This type of PSS is suitable when the PSS is supporting, for example, a third-party product. Access from the product 10 to a PSS engine 12 is enabled by a messaging interface. The PSS engine 12 processes user requests for product support information. The product support information may be in the form of computer-based training modules 14, job aid modules 16 and reference documents 18 or other user support capabilities. The PSS information retrieved by the PSS engine 12 depends on the nature of the request sent to the PSS engine 12. In a linked PSS as shown in Fig. 1, PSS information requests are generally initiated by a user of the product.

Fig. 2 shows another form of PSS which is commonly referred to as an "embedded PSS". In an embedded PSS, the PSS and the product are constructed at the same time and evolve together. The support system therefore becomes an integral part of the product and early prototyping of the PSS can be leveraged in user trials to influence the design of the product. As shown in Fig. 2, an embedded PSS includes a user interface 20 which serves as a vehicle for sending information requests to the PSS engine 12. The PSS engine 12 normally has access to training modules 22, reference information 24 and job aids 26 and other user support functions. The functioning of the embedded PSS shown in Fig. 2 is substantially the same as that described above with reference to the linked PSS shown in Fig. 1.

A shortcoming of the PSS shown in each of Figs. 1 and 2 is that they support only one product. In modem work environments, workers are frequently required to use a plurality of products to perform a job function.

### General Architecture

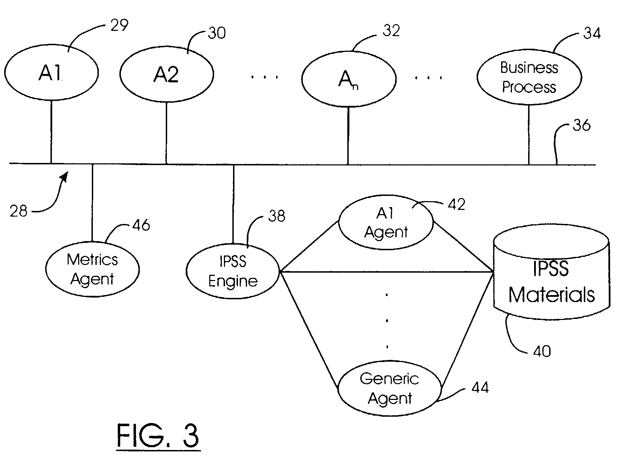

Fig. 3 is schematic diagram of an Integrated Performance Support System (IPSS) 28 in accordance with the invention. The IPSS 28 shown in Fig. 3 supports a plurality of applications, 29,30,32. It may also support one or more business processes 34, which will be explained below in more detail. Each of the applications 29-32 and the business processes 34 are IPSS compliant. IPSS compliant applications and/or business processes are enabled to communicate with a messaging system 36. The messaging system 36 may be any of:
- the World Wide Web protocol, http;
- a Broadcast Message Server (available for example from Hewlett-Packard);
- any other message delivery system.

The applications 29-32 and the business processes 34 may be made IPSS compliant by "building-in" capacity to communicate with an IPSS engine 34 in a predefined protocol. Alternatively, the applications 29-32 and the business processes 34 may be provided with a "wrapper", well known in the art, or an interface to enable communications in the predefined protocol with the IPSS engine 34.

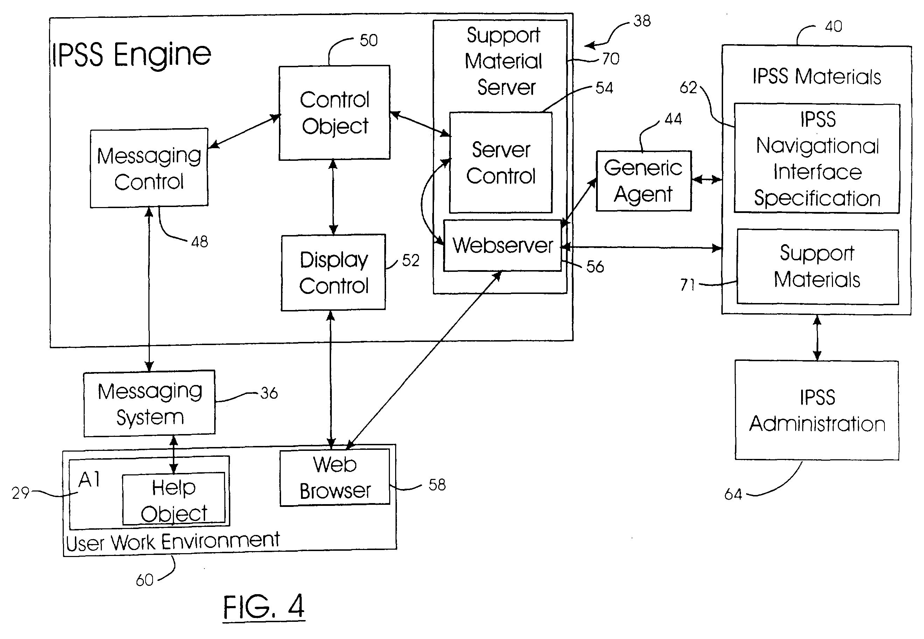

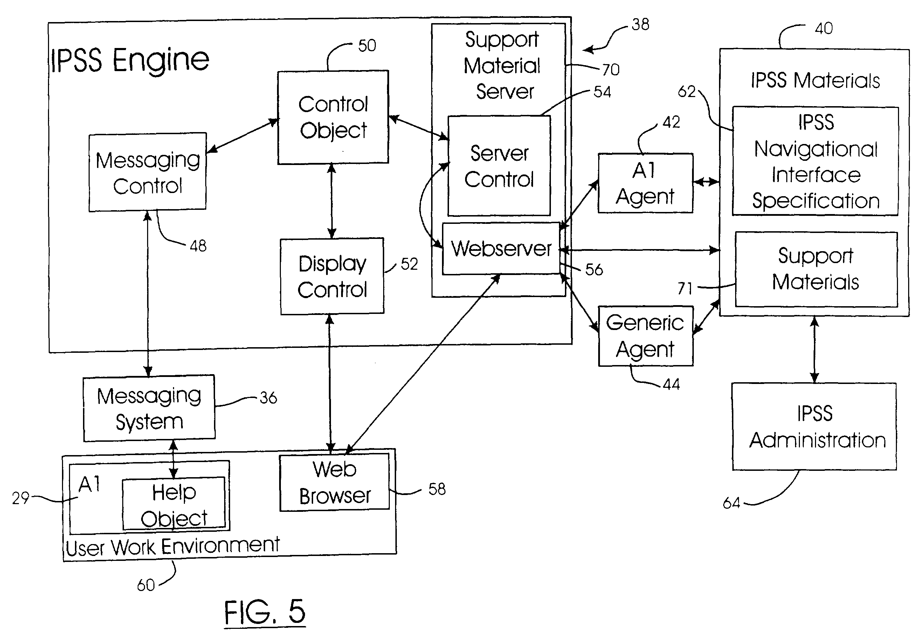

The IPSS shown in Fig. 3 further includes the IPSS engine 38 which will be explained in more detail with reference to Figs. 4 and 5. It also includes a database of IPSS materials 40. The IPSS materials may include all of the information described above with reference to Figs. 1 and 2, as well as business procedures and other custom information installed by an IPSS administrator, as will be described below with reference to Fig. 4.

The IPSS engine 38 may retrieve IPSS information directly or indirectly from the IPSS materials 40. Indirect retrieval is accomplished using application agents 42,44. The application agents may be application specific, such as A1 agent 42. Application specific agents are generally endowed with specific knowledge of its application's domain, functionality and/or terminology. An agent may also be a generic agent such as application agent 44. Generic agents may be used to enhance the functions of the IPSS engine 38. Application agents including generic agents may also have functionality not enabled in the IPSS engine 38. For example, an application agent 40,42 may be enabled to request from the metrics agent 46 a summary of past experience of a user requiring support information. The agent may use that summary to determine the information to be retrieved for the user.

Each of the agents 42,44 are preferably computer programs that operate in conjunction with the applications 29-32 and the IPSS engine 38. The application agents share the processing load of the IPSS engine 38 and provide a modular mechanism for introducing the additional functionality and/or application specific intelligence as requested to improve the performance of the IPSS 28.

The IPSS 28 may preferably include a metrics agent 46. The function of the metrics agent 46 is to log usage statistics related to the IPSS 28. The metrics agent 46 may be programmed to monitor all messages broadcast over the messaging system 36 and, thereby, log statistics related to general usage of the IPSS 28. Alternatively, the metrics agent 46 may be programmed to log statistics only when requested to do so by the IPSS engine 38 or one of the application agents 42,44. The metrics agent 46 is preferably enabled to respond to queries from application agents 40,42 to provide user related data as described above. The metrics agent 46 also preferably includes a report facility so that the accumulated statistics can be used for off-line analysis.

Statistics accumulated by the metrics agent 46 can be valuable for performing a plurality of automated or off-line analyses including:
- isolating applications which require the most user support;
- identifying specific areas or functions within an application which users have most difficulty learning or performing;
- identifying business procedures which require most training;
- identifying support materials most often used;
- culling support materials rarely or never used; or
- identifying users which perform exceptionally well or users which have difficulty performing their job function, in order to respond accordingly.

Fig. 4 shows a schematic diagram of the IPSS engine 38 and its interaction with other components of the IPSS 28. The IPSS engine 38 includes a messaging control module 48, a control object module 50, a display control module 52 and a support material server 70, which consists of a server control 54 and Web server 56. While it is not mandatory that the IPSS engine 38 be modular in its construction, modular construction is preferred for evolution and maintainability, for example.

The messaging control module 48 accepts messages from, and transmits messages to, other components of the IPSS 28 such as applications 29-32, business process 34 or metrics agent 46. Messaging control passes IPSS messages to, and receives messages from, the control object module 50. The control object module 50 coordinates and oversees the activities of the other modules of the IPSS engine 38. For example, when a message is received by messaging control module 48, the message is passed to the control object module 50. On receipt of the message, the control object module 50 queries the server control module 54 to determine whether a Web server 56 is available to service the request. As will be understood by those skilled in the art, although the preferred embodiment of the invention described with reference to Figs. 4 and 5 illustrates an implementation of the invention using a Web server, any other retrieval interface may likewise be used for the same purpose and the invention is in no way limited to implementations in which Web technology or protocols are used for retrieving information from a database of IPSS materials 40.

When a message is received by the control object module 50, it likewise checks with the display control module 52 to ensure that an available Web browser 58 is operational in the user work environment 60 (e.g., user work station). If a Web browser 58 is not operational in the user work environment 60, display control 52 launches the Web browser 58.

The IPSS materials 40 consist of an IPSS navigational user interface specification 62 and the support materials 71. Further, the IPSS administration module 64 allows the IPSS materials 40 to be updated and maintained. These modular components permit the IPSS 28 to be customized in accordance with an organization's requirements by providing the facility to customize the IPSS 28 within certain predefined limits.

The IPSS navigational interface specification module 62 defines a graphical user interface displayed by the Web browser 58 when IPSS information is displayed in the user work environment 60. The IPSS user interface preferably conforms to a predefined standard. The content of indexes and material lists displayed by the IPSS navigational interface specification 62 may, however, be modified by an administrator using the IPSS administration module 64. This is typically done when an IPSS administrator adds new materials to the support materials 71. New materials added may relate to a new application added to the IPSS 28; an update of application support materials (such as new training modules) or, new business procedures which may or may not involve more than one application. As noted above, analysis of statistics accumulated by the metrics agent 46 may indicate where new materials are required. The statistics accumulated by the metrics agent 46 may likewise be useful in identifying information which may be removed from the support materials 71. When new material is added or removed from the support materials 71, this change is reflected in the IPSS navigational interface specification module 62 by the IPSS administration module 64.

Fig. 5 shows a second preferred embodiment of the IPSS 28. In this embodiment, the IPSS 28 includes the agent for application A1, identified as the A1 agent 42, and a generic agent 44. All other components of the IPSS 28 remain the same. As explained above, the agents 42,44 assist and enhance the functionality of the PSS engine 38. As also explained above, the agents 42,44 are preferably independent computer programs which include algorithms to enable interaction with other components of the IPSS 28 and provide an improved intelligence for searching and screening information that is supplied to a user when a request message is received by the PSS engine 38. The primary function of the IPSS agents 42,44 is therefore to add modular intelligence to the IPSS 28. An agent 42,44 is preferably enabled to receive messages in any predefined format to accommodate different messaging systems 36. If an application has a registered agent, such as application A1 29 which has the registered agent A1 agent 42, that application will normally address IPSS messages to its agent. An application without a registered agent will normally address IPSS request messages to the IPSS engine 38. The IPSS engine 38 may, however, pass a request message on to a generic agent 44 depending on the nature of the request.

The agents 42,44 are preferably enabled to send messages to applications 29-32 or business processes 34 if inadequate information is supplied in a request message to permit the agent to satisfy the request. Agents 42,44 are also preferably network aware and thus have the ability to compose messages that are sent across the network using standard network protocols, when required. Agents 42,44 work with the IPSS engine 38 to determine which items of support materials 71 are most appropriately supplied in reply to a request message. The agents 42,44 likewise preferably determine the order in which the support materials are presented to a user.

Agents 42,44 are preferably enabled to work with little or no context information to display default support information in response to a generic request for help. In order to satisfy a generic request of that type, an agent may present a help index to the user, for example. Agents are also preferably enabled to work with minimal context information (the window a user has opened, for example) in order to respond to an information request message. On the other hand, agents are also preferably enabled to receive a long argument list (which specifies a detailed user context) which may be used to tailor the retrieval and ordering of information in response to a request message. The argument list may include, for example, the application, window, field and cursor position. The user may likewise be identified. Preferably, the agent is enabled to send messages to the metrics agent for information respecting the user or to accumulate its own user statistics in order to further tailor information retrieved to the specific needs of the user.

### Support Material Retrieval

A method of support material retrieval using the preferred embodiment of the invention illustrated in Fig. 5 will now be explained in order to illustrate how the IPSS 28 functions to provide performance support.

By way of example, a request message is sent by application A1 29 to its agent A1 agent 42 requesting general help for a user of the application. Even though the message is addressed to the A1 agent 42, it is received by the IPSS engine 38 and is accepted by the messaging control module 48. The message is passed to the control object module 50 which passes the message on to the display control module 52. The display control module 52 uses the Message Purpose parameter to compose a command for the Web browser 58. The command instructs the Web browser 58 to get information from the Web server 56. Preferably, the command instructs the Web server 56 to access agent A1 through a common gateway interface (CGI), by supplying an address at the Web server and a URL of the CGI on the server. The Web browser is likewise passed the content of the message purpose field. The browser command may be, for example:
"http://127.0.0.1:5555/IPSS_go.CGI?go_search".

The Message Purpose and any other parameters available are passed to the A1 agent 42, which executes its algorithms to narrow or broaden the list in view of the parameters and its knowledge of the application.

For example, on receipt of the list of materials from the CGI, the A1 agent 42 may request further particulars, as will be described below in the examples that follow, or may simply use its knowledge of the application to narrow or broaden the list supplied by the CGI of Web server 56. After the A1 agent 42 has completed its processing, it returns a frameset in a manner well known in the art which it passes back to the Web browser 58. The frameset defines a user interface, navigational controls and IPSS information identified as HTML page(s). On receipt of the frameset, the Web browser 56 reads the indicated HTML page(s) from the IPSS materials 40 using Web server 56 in a manner well known in the art. The user interface navigational controls are also displayed in the user work environment 60, and the user is thereby provided with access to the help information required. If an index of help materials is supplied in response to the request for general help, the user may subsequently locate an item of interest in the index. When the user selects the item of interest, the desired information is retrieved directly from the support materials 71, mediated by the Web server 56.

It should be understood that the support material retrieval method described above is exemplary only and many other procedures may be used to achieve a similar result.

### Message Protocol

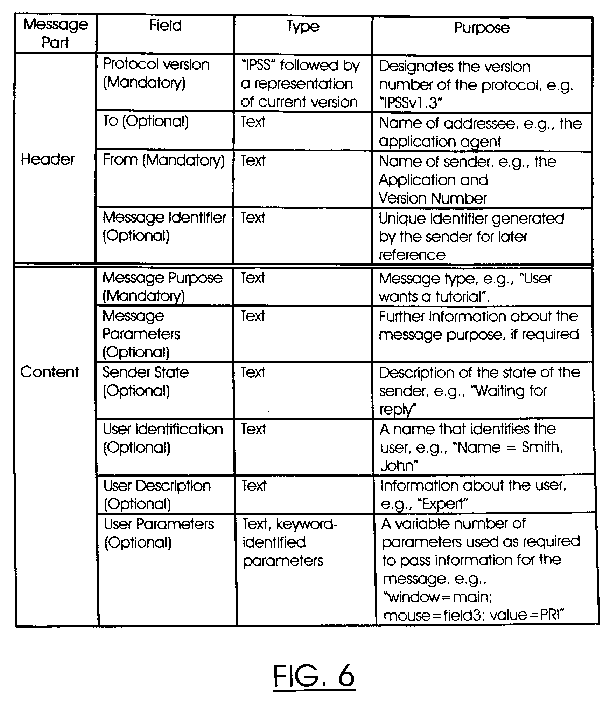

In order to ensure proper and consistent functionality, IPSS messages must conform to a predefined protocol. Fig. 6 shows a table of a preferred IPSS message protocol. Note that Fig. 6 shows general specifications, and a specific IPSS protocol version would specify field sizes, textual coding, character sets, etc. Each message includes an IPSS header portion and an IPSS content portion. The header portion and the content portion each include discrete fields, certain of the fields being mandatory and certain of the fields being optional. Information for mandatory fields must be supplied in every message. Information for optional fields may be omitted from any message. The header portion includes four fields, namely: Protocol Version (mandatory); To (optional); From (mandatory); and, Message Number (optional). The Protocol Version is alpha numeric and it includes the letters "IPSS" followed by a representation of the current version, for example "IPSSv1.3".

The optional "To" field designates the addressee of the message. The field type is text and it is used to pass the name of the addressee, for example, the name of an application's registered agent. Unaddressed messages are accepted by the IPSS engine 38 (Figs. 4,5) and responded to by the IPSS engine 38.

The mandatory "From" field is a text field. It includes the name of the sender, for example, an application name and a version number.

The optional "Message Identifier" field is text. It is used to pass a unique identifier generated by the sender for later reference. Generally the Message Identifier is included in messages to which a response is required, such as a request for further information which will be described below in more detail.

The IPSS message content includes six fields, namely: Message Purpose (mandatory); Message Parameters (optional); Sender State (optional); User Identification (optional); User Description (optional); and, User Parameters (optional).

The mandatory "Message Purpose" is a text field which specifies the purpose of the message. The Message Purpose is preferably expressed in plain English and have the value, for example, "user_requests_tutorial". Other acceptable values could include: "user_requests_general_help"; "register_agent"; "acknowledgement"; "need_user_ context"; "providing_context"; "request_next_user_step"; "next_user_step"; "request_task_review"; "task_review_ status"; and, "metrics". It will be understood by those skilled in the art that these Message Purposes are exemplary only and any other values may be used, as required.

The optional "Message Parameters" is a text field which may be used to pass further information about the Message Purpose, if required.

The optional "Sender State" is also a text field and may be used to pass a description of the state of the sender. For example, the field may include a value such as "waiting_for_reply".

The optional "User Identification" is a text field used to pass the identity of a user with which a request message is associated. Users may be identified by name. For example, "Name=Smith/John" or by any other unique identifier used by the IPSS 28.

The optional "User Description" field is a text field used to pass information about the user. For example, the user may be classified as "expert", "novice", or "intermediate". Any other classification consistently used throughout the IPSS 28 is also appropriate.

The last field labeled "User Parameters" is likewise optional. It is a text field which stores key word-identified parameters. A variable number of parameters may be used as required to pass information related to a request. For example, information such as "Window=Main"; "Mouse=Field_3"; "Value=PRI" may be passed to provide the IPSS engine 38 or an agent 42,44 with data useful in retrieving information from the IPSS materials (Figs. 4,5). The arguments in the User Parameters field are preferably tagged and unordered. For example, "Language=English", "Level=Novice". Any particular implementation of the IPSS 28 may require a different message protocol. It will be understood by those skilled in the art that the parameters governing the IPSS message protocol are matters of design choice.

Several examples of the use of the message protocol shown in Fig. 6 are now described below to further illustrate the functionality of the IPSS 28.

### EXAMPLE 1

In order to be functional, an agent which represents an application must be registered with the IPSS engine 38. This example illustrates a call from an application to register with the IPSS engine 38 the name of an agent that should subsequently represent the application. All applications are preferably required to perform such registering if they will later be communicating with a specific agent. In this example, the name of the agent is specified by providing a directory path to the file that contains the agent program. It should be noted that the application requires an acknowledgement from the IPSS engine 38 that the message has been received and complied with. The application requests the acknowledgement and provides a message number (15, in this example) in order to correlate a reply message from the IPSS engine 38 with the original request. As described above, the blank "To" field defaults to the IPSS engine 38.

Table 1 shows the contents of the message sent by the application A1 29 to the IPSS engine 38 (Fig. 3) in order to register the A1 agent 42.

**Table 1**

| **Field** | **Content** |
|---|---|
| Protocol Version (mandatory) | IPSS1.0 |
| To (optional) | |
| From (mandatory) | A1/v1.1 |
| Message Number (optional) | 15 |
| Message Purpose (mandatory) | Register_agent |
| Message Parameters (optional) | Agent_path=$A5_HOME/Agent_directory/A1_agent |
| Sender State (optional) | Waiting_for_acknowledgement |
| User Identification (optional) | |
| User Description (optional) | |
| User Parameters (optional) | |

On receipt of the registration request, the IPSS engine 38 performs the registration process and returns an acknowledgement to the application A1 29.

Table 2 shows the acknowledgement response sent from the IPSS engine 38.

**Table 2**

| **Field** | **Content** |
|---|---|
| Protocol Version (mandatory) | IPSS1.0 |
| To (optional) | A1 |
| From (mandatory) | PSS/v2.3 |
| Message Number (optional) | 15 |
| Message Purpose (mandatory) | Acknowledgement |
| Message Parameters (optional) | |
| Sender State (optional) | |
| User Identification (optional) | |
| User Description (optional) | |
| User Parameters (optional) | |

It should be noted that since a Message Number was specified in the request, the IPSS engine 38 re-used the Message Number in the optional Message Number field in the return message for acknowledgement. This permits the application A1 29 to recognize the acknowledgement was an acknowledgement of its request to register the application agent A1 42.

### EXAMPLE 2

Example 2 illustrates a request message sent from application A1 29 without context supplied and only a general request for help. The IPSS 28 has to determine what type of support to provide and would probably display a menu of support materials in response to the message. Table 3 shows the content of the IPSS request message.

**Table 3**

| **Field** | **Content** |
|---|---|
| Protocol Version (mandatory) | IPSS1.0 |
| To (optional) | A1_agent |
| From (mandatory) | A1/v1.1 |
| Message Number (optional) | |
| Message Purpose (mandatory) | User_requests_general_help |
| Message Parameters (optional) | |
| Sender State (optional) | |
| User Identification (optional) | |
| User Description (optional) | |
| User Parameters (optional) | |

Although the message shown above in Table 3 is addressed to A1 agent 42, the message is received by the IPSS engine 38 where it is accepted by the messaging control module 48 (Fig. 5). The message is subsequently handled as described in the section "Support Material Retrieval", and the support material retrieved is displayed in the user work environment 60.

### EXAMPLE 3

This example illustrates an instance in which an IPSS message request provides context information in relation to a request for a tutorial. It is of course possible for an application to request a specific tutorial based on user activity. In this example, the application specifies that a tutorial is required but does not have enough information to indicate which tutorial is most appropriate. The application therefore addresses a request to its registered agent to retrieve the most appropriate tutorial given the current user activity.

Table 4 illustrates the contents of the message sent by application A1 29 to its agent.

**Table 4**

| **Field** | **Content** |
|---|---|
| Protocol Version (mandatory) | IPSS1.0 |
| To (optional) | A1_agent |
| From (mandatory) | A1/v1.1 |
| Message Number (optional) | |
| Message Purpose (mandatory) | User_requests_tutorial |
| Message Parameters (optional) | |
| Sender State (optional) | |
| User Identification (optional) | Name=Jones/Mary; |
| | id=87654321 |
| User Description | Level=expert; |
| (optional) | Context=specific |
| User Parameters (optional) | Window=Function_1_window |
| | Mouse_field=Field_5; |
| | Mouse_field_value=27; |
| | Cursor_field=Field_8; |
| | Cursor_field_value=Southern_Bell |

As may be seen in Table 4, the application A1 29 identifies the user and provides its agent with the experience level of the user. The application also identifies the user activity at the time the request was launched. The process executed by the IPSS engine 38, the Web browser 58, the Web server 56 and the A1 agent 42 is substantially as described above in the section entitled "Support Material Retrieval". The A1 agent 42 receives the argument list from User Parameters as well as the User Identification, the User Description and the Message Purpose. The A1 agent 42 uses this information to select the most appropriate tutorial from a preliminary list provided by the CGI and returns a frameset to the Web browser 58 which displays the selected tutorial to the user using the frameset as described above.

### EXAMPLE 4

This example illustrates a situation in which the IPSS agent requires more information about a users activity in order to determine which information is most properly returned in response to an IPSS request message. In order to obtain the information, the agent sends a message back to the application which launched the request. To facilitate coordination of a response with the request, the application agent (A1 agent 42) specifies a Message Number (27 in this example). The information that it requires is the value of the User Field_12. Table 5 shows the message sent by the A1 agent 42 to the application A1:

**Table 5**

| **Field** | **Content** |
|---|---|
| Protocol Version (mandatory) | IPSS1.0 |
| To (optional) | A1 |
| From (mandatory) | A1_agent/v1.1 |
| Message Number (optional) | 27 |
| Message Purpose (mandatory) | Need_user_context |
| Message Parameters (optional) | Field=Field_12 |
| Sender State (optional) | |
| User Identification (optional) | |
| User Description (optional) | |
| User Parameters (optional) | |

On receipt of the request message, the application A1 responds to the application agent A1 agent 42 with a response message which is illustrated below in Table 6:

**Table 6**

| **Field** | **Content** |
|---|---|
| Protocol Version (mandatory) | IPSS1.0 |
| To (optional) | A1_agent |
| From (mandatory) | A1/v1.1 |
| Message Number (optional) | 27 |
| Message Purpose (mandatory) | Providing_context |
| Message Parameters (optional) | Field=Field_12; |
| | Value=PRI |
| Sender State (optional) | |
| User Identification (optional) | |
| User Description (optional) | |
| User Parameters (optional) | |

As shown above, the application A1 29 uses the Message Number "27" to facilitate recognition by the A1 agent 42 that it has received a response to its request for further information. Recognition is further facilitated by the Message Purpose which indicates "Providing_context". The value of the Field_12 is indicated to be "PRI" which enables the A1 agent 42 to retrieve appropriate information from the IPSS materials 40 in response to the request.

## Claims

1. A computer-implemented performance support system, comprising a performance support database for storing performance support information, a computer-implemented integrated performance support interface adapted to receive messages and retrieve information from the performance support database in response to a content of the messages **characterized** in that:
the performance support system is an integrated system that provides performance support for at least two computer-implemented applications using an integrated support engine adapted to receive messages which conform to a predefined protocol and a message transport system for transferring messages between the computer-implemented applications and the integrated performance support engine.

2. A computer-implemented integrated performance support system as claimed in claim 1 wherein the computer-implemented applications have built-in capacity to communicate with the integrated performance support engine using the predefined protocol.

3. A computer-implemented integrated performance support system as claimed in claim 1 wherein the computer-implemented applications have a wrapper or an interface to enable the application to communicate with the integrated performance support engine using the predefined protocol.

4. A computer-implemented integrated performance support system as claimed in claim 1 wherein the predefined protocol specifies at least the following message fields:
a) a sent-to field for indicating an intended recipient for the message;
b) a sent-from field for indicating an origin of the message;
c) a message identifier field for indicating a unique reference for the message;
d) a message purpose field for indicating a purpose of the message;
e) a message parameter field for additional information respecting the purpose of the message.

5. A computer-implemented integrated performance support system as claimed in claim 4 wherein the fields b) and d) are mandatory fields and the remainder of the fields are optional.

6. A computer-implemented integrated performance support system as claimed in claim 4 wherein the predefined protocol includes at least the following further message fields:
f) an IPSS protocol version field which indicates a version of the protocol used by the message sender;
g) a sender-state field which indicates a status of the sender of the message;
h) a user-identification field which identifies a user of the application which sent the message;
i) a user-parameters field for information respecting the activity of the user when the massage was sent;
j) a user-description field for indicating further information about the user.

7. A computer-implemented integrated performance support system as claimed in claim 6 wherein the field f) is mandatory and all the remainder of the fields are optional.

8. A computer-implemented integrated performance support system as claimed in claim 1 wherein the message transport system comprises a message server.

9. A computer-implemented integrated performance support system as claimed in claim 1 wherein the message transport system comprises an http daemon.

10. A computer-implemented integrated performance support system as claimed in claim 1 wherein the database includes user support materials, comprising:
a) user guides for each computer-implemented application;
b) reference documents for each computer implemented application;
c) procedural checklists and reminders for functions to be performed using each computer-implemented application.

11. A computer-implemented integrated performance support system as claimed in claim 10 wherein the database further includes computer-based training related to each computer-implemented application.

12. A computer-implemented integrated performance support system as claimed in claim 1 wherein the system further includes at least one application agent program which serves as an interface between the integrated performance support engine and the database, the at least one application agent program retrieving information from the database in response to requests from the integrated performance support engine.

13. A computer-implemented integrated performance support system as claimed in claim 1 wherein the system further includes a metrics agent for maintaining a log of integrated performance support system use.

14. A computer-implemented integrated performance support system as claimed in claim 13 wherein all performance support messages are accepted by the metrics agent.

15. A computer-implemented integrated performance support system as claimed in claim 13 wherein only messages explicitly addressed to the metrics agent are accepted by the metrics agent.

16. A method of providing computer-implemented integrated performance support, comprising the steps of building-in capacity to formulate request messages in a predefined message protocol for retrieving performance support information from an information source, the performance support information being in a format that permits selected portions to be retrieved in response to the request messages **characterized** in that:
the information source is independent of the computer-implemented application and the performance support information is deposited in the source independent of the computer-implemented application.

17. The method of providing computer-implemented integrated performance support as claimed in claim 16 wherein the method further comprises the steps of:
providing an application agent, the application agent being a computer program which includes instructions useful for intelligently retrieving the portions of the information from the source; and
registering the application agent with an integrated performance support engine to inform the integrated performance support engine that the agent is to subsequently represent the computer-implemented application as an interface between the performance support engine and the information source.

18. The method of providing computer-implemented integrated performance support as claimed in claim 17 wherein the application agent receives information in a request message that identifies the user of a computer-implemented application which launched the request message.

19. The method of providing computer-implemented integrated performance support as claimed in claim 18 wherein the agent also receives information which identifies at least an area of the computer-related application in which the user was working when the request message was sent.

20. The method of providing computer-implemented integrated performance support as claimed in claim 18 wherein the application agent stores user-specific history to permit the application agent to respond to request messages so that the information retrieved is tailored to individual requirements of the user.

21. The method of providing computer-implemented integrated performance support as claimed in claim 18 wherein the application agent is enabled to obtain user-specific data from a metrics agent which routinely collects user-specific data related to the user's experience with computer-implemented applications enabled with integrated performance support.

22. The method of providing computer-implemented integrated performance support as claimed in claim 17 wherein the application agent is specific to the computer-implemented application and has specific knowledge of the application's domain, functionality or terminology.

23. The method of providing computer-implemented integrated performance support as claimed in claim 17 wherein the application agent is enabled to send a message to a computer-implemented application.

24. The method of providing computer-implemented integrated performance support as claimed in claim 17 wherein the application agent determines what information is to be retrieved from the information source and the order in which the information is to be supplied in response to a request message.

25. The method of providing computer-implemented integrated performance support as claimed in claim 16 further including the steps of:
supplementing the information source with business process information which provides process steps to be performed using the computer-implemented application in order to accomplish a job function; and
enhancing a performance support navigational interface specification to permit a user of the computer-implemented application to have access to the business process.

26. A computer-implemented performance support system, comprising a performance support database for storing performance support information, a computer-implemented integrated performance support interface adapted to receive messages and retrieve information from the performance support database in response to a content of the messages **characterized** by:
means for storing performance support information; means for receiving messages that conform to a predefined protocol from any computer-implemented application and directly or indirectly retrieving information from the means for storing the performance support information in response to a content of the messages; and
means for transferring messages between the computer-implemented application and the means for receiving the messages.
